# EUROPEAN PATENT APPLICATION

(11) **EP 1 993 073 A2**
(43) Date of publication of application: **19.11.2008**
(21) Application number: 08009092.1
(22) Date of filing: 16.05.2008
(51) Int. Cl.: G06T 7/00

(54) **Method for the automatic segmentation of anatomical structures**

(30) Priority: 18.05.2007 IT PD20070174
(71) Applicant: Atzori, Manfredo, 35100 Padova (IT)
(72) Inventor: Atzori, Manfredo, 35100 Padova (IT)

(57) **Abstract**

A method for automated segmentation of anatomical structures, characterized in that it includes:
- a first phase during which, from a series of data acquired with any scanning device, is built a representation through a two-dimensional or three-dimensional numerical matrix, in which are included the data correspondent to an anatomical macro-structure containing the anatomical structure of interest, the matrix elements being arranged with coordinates that correspond to mutual positions of the data in the studied body,
- a second phase during which is chosen, in the data matrix described in the first phase, at least one arbitrary point of the anatomical structure belonging to the macro-structure, the point being in a position far from the contour of the anatomical structure.
- a third phase during which are selected the data representing elements of the macro-structure comparable, for the values with which they are detected by the scanning apparatus, to the values with which the anatomical structure of interest is detected,
- a fourth phase in which are chosen, in the data selected in the third phase, the data connected, in the sets of elements of volume with non-zero values, to the point initially identified,
- a fifth phase during which the data chosen in the fourth phase are processed with a series of iterative processes of morphological erosion,
- a sixth phase during which are set to zero the data that, as a result of iterative processes of morphological erosion executed in the fifth phase, are no longer connected, in the sets of elements of volume with non zero values, with the point initially identified,
- a seventh phase during which the matrix elements remained, as a result of the elimination made in the sixth phase, are processed with a series of iterative morphological dilation processes and are eliminated the elements of the obtained matrix that are not connected, in the sets of elements of volume with non-zero values, to the point identified in the second phase and/or the elements that are not comparable, in the value with which they are detected by the scanning apparatus, to the values with which the anatomical structure of interest is detected,
- an eighth phase during which the data obtained after the morphological erosion process described in the fifth phase are processed with a series of iterative processes of morphological dilation, conditioned to the data obtained in the seventh phase.

## Description

This invention concerns a method for the automatic segmentation of anatomical structures.

There are known methods for the automatic segmentation of anatomical structures. They are used for analysis of medical imaging, obtained with any technique able to provide the data necessary to the proceedings, and generally aimed at diagnostic purposes or research.

The segmentation processes used allow to divide the data collected from the scanning apparatus in regions corresponding to anatomical structures, in order to select the structures of interest.

The applications include the identification, segmentation, volumetric analysis, morphological analysis and identification of lesions in extracted tissues.

These can be bone structures, that can be segmented in Magnetic Resonance Imaging (MRI) and Computerized Tomography (CT), blood vessels, that can be segmented in angiograms, tumours, that can be segmented into MRI scans and CT Positron Emission Tomography (PET), encephalon and its main anatomical substructures that can be segmented in MRI scans, CT and PET.

Currently identification and segmentation of anatomical structures in medical imaging is made at the computer, using special analysis algorithms. These can be manual, semi-automatic or automatic.

In the case of manual algorithms, the user identifies the anatomical contour of the anatomical structure in each slice of the scan through a process called tracking. The data located within this contour are then extracted from the raw data and analysed as corresponding to the sought anatomical structure.

In the case of algorithms partially and fully automatic, various techniques are applied to extract the data corresponding to the sought anatomical structure, most of them based on analysis procedures as threshold, differential intensity analysis and iteration of morphological operations.

These techniques are usually associated with information on the morphology and the dimensions of the sought structure, usually present in the form of a priori knowledge or obtained from the analysis of other scans of the same structure.

The intensity thresholds, differential variations of intensity limits, and the number of iterations of morphological operations necessary to extract the sought structures are decided by the user in the case of semi-automatic algorithms, while are inherently defined in the case of fully automatic algorithms.

Regarding manual processes, the limits are their high time consume, the need of specialized medical personnel, and the variability of results obtained by the same structure, due to subjectivity and the singularity of the process.

For semiautomatic algorithms, the main limitation is the lack of precision and accuracy of the results that usually give errors of about 6% in the case of brain segmentation compared with manually segmented data. The difference is due to the inclusion of anatomical structures different from the searched ones and to the elimination of parts of them.

The variability of results, dependent on the subjectivity and the singularity of the process, shall be added to this limit.

With regard to the automatic processes, the main limits are constituted by even lower precision and accuracy values, with errors of 9% in case of brain extraction, in comparison with data extracted manually by specialists.

The aim of the invention is to overcome all the limits recognizable in the state of the art and to propose a method able to combine the precision of the results of the manual segmentation with speed of execution, not subjectivity and reproducibility of the results offered by automatic processes, all of this without requiring any interaction with the user except the stages of entering data and evaluating the results.

Further aims are to maintain the data totally unchanged, in order not to lose information in the course of the analysis and not to impose any constraints on the size and proportions of anatomical structures segmented.

All these and other aims resulting from the description that follows are reached, according to the invention, through a method for automated segmentation of anatomical structures as described in claim 1.

This invention is further clarified below in one of his favourite form of practical realization, with reference to the attached set of drawings, in which
figure 1 shows a block diagram of the operational phases of the method according to the invention,
figures 2.1-2.7 illustrate seven images of seven successive phases of the method.

As can be seen from the figures, the method can be schematized in operational phases.

In the phase 1 the data that shall be analyzed are provided to the process, such data are assumed to be geometrically reconstructed in a two-dimensional or three-dimensional matrix with one or more numerical values per element. We call such data I1. It is assumed that these data correspond to a representation of various objects corresponding to anatomical structures characterized by different positions. These objects can also have the same medium intensities within the limits of statistical and systematic variability due to the apparatus (comparable intensity) or different. In the case of objects with equal medium intensities, different objects can be united or separated. In the first case we define the data belonging to them connected in the second unconnected (R. Gonzalez, R. Woods, Digital Image Processing, Inc. Prentice-Hall., 2002, p.66-67). The purpose of this method is to identify the data corresponding to an object, in order to extract it from 11, to identify its outer surface and to analyze it separately from the other data.

In phase 2 is identified in I1 a matrix element belonging to the searched object. We call this point P0.

In phase 3 is realized a copy E1 of the matrix I1, in which are eliminated (set to zero) the data with numerical values not comparable with those proposed for the searched tissue and the data having comparable values but not connected to P0.

In phase 4 is done an evaluation of E1. If E1 meets appropriate criteria relating the anatomical structure to be extracted, you can consider the object extracted from the others connected. Otherwise you go to step 5.

In phase 5 is applied to E1 a morphological erosion process (R. Gonzalez, R. Woods, Digital Image Processing, Inc. Prentice-Hall., 2002, p.525) with an arbitrary erosion form.

In phase 6 is carried out an assessment of the obtained results, based on the number of processes of erosion applied and/or on the properties of objects in E1. If E1 meets appropriate criteria relating the object to be extracted, you can consider the object extracted from the others connected and proceed to step 7. Otherwise you return to Step 5.

In phase 7 the data that are not connected to P0 in E1 are eliminated (set to zero).

In phase 8 is realized a copy E2 of I1. The data that are zero in E1 after processing it with n1 cycles of dilation with an arbitrary dilation form (R. Gonzalez, R. Woods, Digital Image Processing, Inc. Prentice-Hall., 2002, p.523) and/or that are not connected to the point identified in phase 2, in the sets of elements of volume with not zero values, are set to zero. The number of cycles of expansion n1 can be arbitrary, determined by the number of cycles of erosion that were applied to E1 or determined by other properties of E1.

In phase 9 E1 is processed with a series of dilation processes conditioned to E2 with an arbitrary dilation form.

These processes consist in the succession of a process of dilation of E1 and the elimination of the points that have value 0 in the correspondent coordinates in E2.

In phase 10 an evaluation of the obtained results is done, based on the number of processes of conditioned dilation applied, on the number of cycles of erosion previously made and/or on other properties of E1.

The phase 11 matches the end of the extraction process of the searched object (corresponding to the object in the matrix obtained from the product element by element product of E1 and I1) and the possible detection of the contour of the object.

The described processes of morphological erosion, morphological dilation and conditioned morphological dilation can be made, depending on the anatomical searched structure, in isotropic or anisotropic space, with morphological alteration forms independent or dependent from the position of the matrix element on which they are going to act.

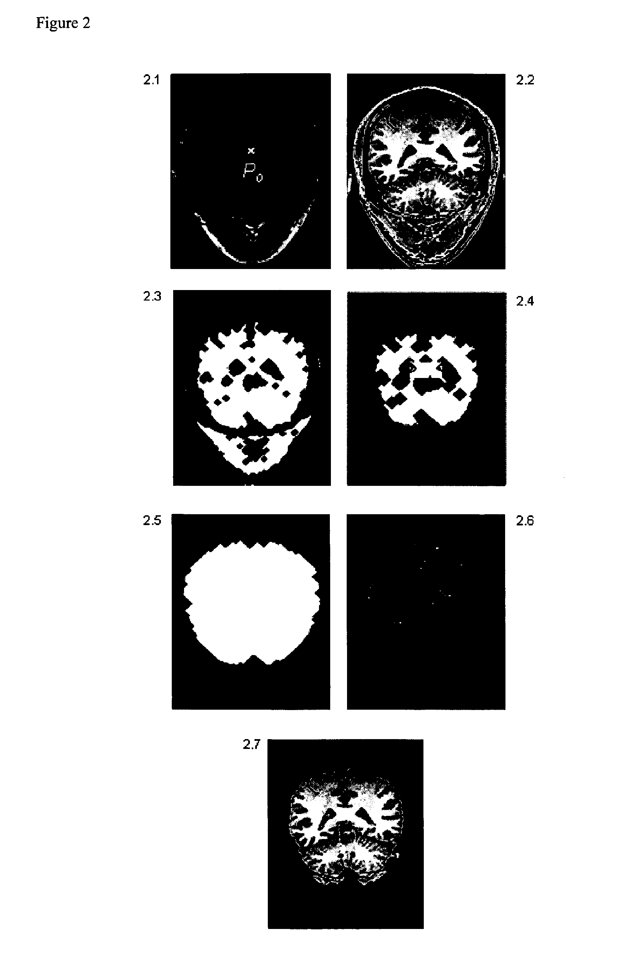

The described procedure has a particular application in the segmentation of the encephalon in three-dimensional magnetic resonance scans of the head. In Figure 2 is showed a representation of this process through images on intermediate sections of the head.

In the first operational phase the raw data 11, that consist in this case in a three-dimensional distribution of intensity, are given to the algorithm,.

In the second phase, analysing properties of the scan such proportions and total or partial intensity distributions of the data, the point P0 internal to the encephalon (shown in Figure 2.1 with a white x) is identified in the raw data.

This point was chosen to correspond in this application to an anatomical structure called splenium of corpus callosum, located in a position approximately central to the encephalon.

In phase 3 is realized a copy E1 of the matrix I1, in which are eliminated (set to zero) the data with intensity not comparable with those assumed to correspond to the encephalon and the data having comparable intensity values but not connected to P0 (Figure 2.2). The obtained matrix is transformed in binary form.

The fourth phase consists in the evaluation of the obtained result.

In the fifth phase morphological erosion processes are iterated on E1 (Figure 2.3), while n the sixth phase the result is evaluated. If the ratio of the volume of data connected to P0 and the volume of the head is below a threshold value determined experimentally, the iteration of the erosion processes is interrupted and the volume elements not connected to P0 are eliminated from E1. Otherwise the process returns to the fifth phase. The erosion processes are applied using a morphological action shape corresponding to a sphere in the real space of the studied object. In this particular case it is necessary not to apply the erosion processes on a volume surrounding P0, in order to prevent it from being removed in E1.

In the seventh phase the data not related to P0 are eliminated in E1 (Figure 2.4).

In the eighth phase is carried out a copy E2 of 11. The elements of volume that are equal to zero in E1 after processing E1 with morphological dilation processes with the same morphological action shape used in the fifth phase are placed to zero in E2. The number of morphological dilation processes applied is approximately the same of the erosion processes applied in the fifth phase (Figure 2.5).

In the ninth phase E1 is processed with dilation processes conditioned to E2. These processes consist in the succession of a process of dilation of E1 and the elimination in E1 of the points that have value zero in the correspondent coordinates in E2 (Figure 2.6).

In the tenth phase is carried out an assessment of the result obtained, based on the number of cycles of morphological erosion and on evaluations of the comparison of the outer surface of E1 and the voxel of the correspondent coordinate in 11. The matrix obtained from the product element by element between E1 and I1 is the extraction of the searched anatomical structure in 11 (Figure 2.7).

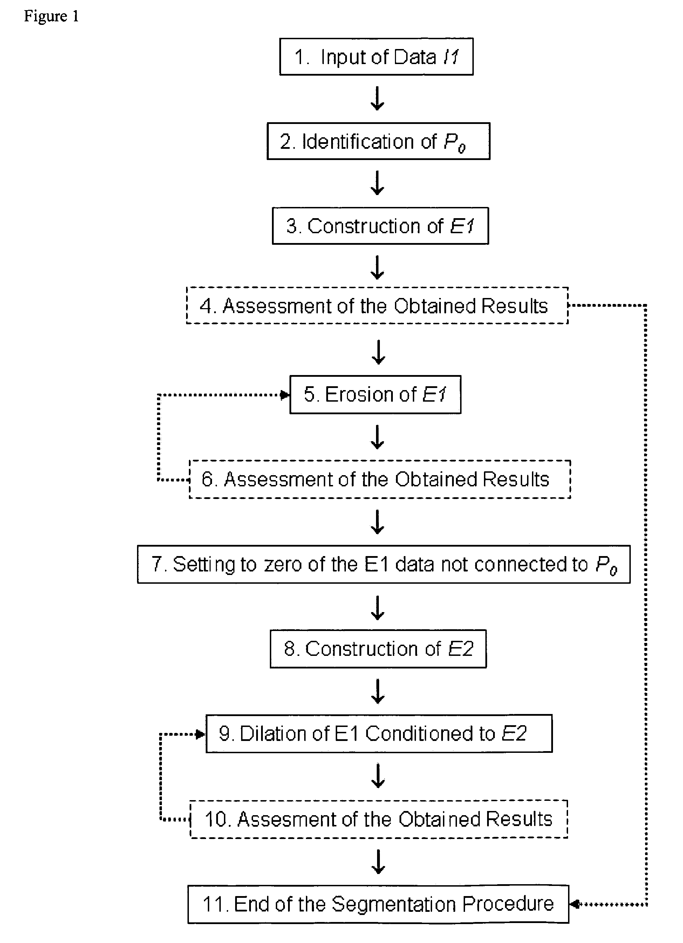

It is important to notice that phases 4, 6 and 10 of the scheme represented in figure 1 can be eliminated defining a constant number of iterations for the erosion, dilation and conditioned dilation processes.

This is however difficult to implement because of the considerable morphological variability of the same anatomical structures in different subjects.

It shall be noticed that the morphologic erosion operations can be varied in relation to the coordinates of the data, and that this can be done also for the intensities correspondent to the searched tissue.

It can be necessary, depending on the searched anatomical structure, to maintain some of the data surrounding P0 unchanged during the morphological erosion step, in order to ensure that the processes of erosion do not eliminate them from the data.

It is clear that the main advantage of the method described is its simplicity of operation.

In fact this factor implies that, properly estimated parameters such as numerical values of the data corresponding to the anatomical structure to segment, and identified correctly the point P0 belonging to it, it is difficult to obtain random errors during the application of the process.

It follows from this factor that this method will lead to more accurate results than those obtained with other methods currently available in the extraction and volume calculation of tissues.

For example, in the encephalon extraction, the results have errors of 3% compared with manually segmented ones, against errors of 9% from automatic and semi-automatic segmentation algorithms commercially available.

Another advantage is the possibility to bring the problem of identification of every anatomical structure to the identification of a single point belonging to it.

This fact makes it easy to implement the automation of the process for every anatomical structure. It also greatly reduces the difficulty of identifying the searched structures by reducing the problem to the identification of a unique point, which can be chosen as the most easily and surely identifiable.

It is also easy, because of the simplicity of the method, to implement in it estimates of the precision and accuracy of the result obtained, based on the theory of errors and on the analysis of the values of the data surrounding the anatomical structure extracted.

## Claims

1. Method for automated segmentation of anatomical structures **characterized in that** it includes:
- a first phase during which, from a series of data acquired with any scanning device, is built a representation through a two-dimensional or three-dimensional numerical matrix, in which are included the data correspondent to an anatomical macro-structure containing the anatomical structure of interest, the matrix elements being arranged with coordinates that correspond to mutual positions of the data in the studied body,
- a second phase during which is chosen, in the data matrix described in the first phase, at least one arbitrary point of the anatomical structure belonging to the macro-structure, the point being in a position far from the contour of the anatomical structure.
- a third phase during which are selected the data representing elements of the macro-structure comparable, for the values with which they are detected by the scanning apparatus, to the values with which the anatomical structure of interest is detected,
- a fourth phase in which are chosen, in the data selected in the third phase, the data connected, in the sets of elements of volume with non-zero values, to the point initially identified,
- a fifth phase during which the data chosen in the fourth phase are processed with a series of iterative processes of morphological erosion,
- a sixth phase during which are set to zero the data that, as a result of iterative processes of morphological erosion executed in the fifth phase, are no longer connected, in the sets of elements of volume with non-zero values, with the point initially identified,
- a seventh phase during which the matrix elements remained, as a result of the elimination made in the sixth phase, are processed with a series of iterative morphological dilation processes and are eliminated the elements of the obtained matrix that are not connected, in the sets of elements of volume with non-zero values, to the point identified in the second phase and/or the elements that are not comparable, in the value with which they are detected by the scanning apparatus, to the values with which the anatomical structure of interest is detected,
- an eighth phase during which the data obtained after the morphological erosion process described in the fifth phase are processed with a series of iterative processes of morphological dilation, conditioned to the data obtained in the seventh phase.

2. Method according to claim 1, **characterized in that** in the second phase it identifies a set consisting of a plurality of points.

3. Method according to claims 1 and/or 2, **characterized in that** in the second phase, the point is automatically identified by the proportions and dimensions of the studied macro-structure and by estimates of the values with which the point shall be detected by the scanning apparatus.

4. Method according to claim 1, **characterized in that** it is applied to the segmentation of the brain.

5. Method according to claim 4, **characterized in that** the point identified in the second phase is located approximately in a position central to the brain.

6. Method according to claim 4, **characterized in that** the point identified in the second stage belongs to the corpus callosum.

7. Method according to claim 6, **characterized in that** the point identified in the second stage belongs to the splenium of corpus callosum.

8. Method according to claim 1, **characterized in that** an arbitrary number of matrix elements surrounding the point identified in the second phase are preserved from the processes of morphological erosion mentioned in the fifth phase.

9. Method according to claim 1, **characterized in that** the morphological processes of erosion are carried out anisotropicly.

10. Method according to claim 1, **characterized in that** the morphological dilation processes are carried out anisotropicly.

11. Method according to claim 1, **characterized in that** the processes of conditioned morphological dilation are carried out in anisotropicly.

12. Method according to claim 1, **characterized in that** the morphological dilation processes are made with different morphological alteration forms, depending on the position of the data on which the forms are applied, with relation to the position of the point identified in the second phase.

13. Method according to claim 1, **characterized in that** the iterations of morphological erosion processes described in the fifth phase are interrupted on the basis of an assessment of the volume of data connected to the point identified in the second phase.

14. Method according to claim 1, **characterized in that** the iterations of morphological erosion processes described in the fifth phase, of morphological dilation processes described in the seventh phase and of morphological conditioned dilation processes described in the eighth phase are interrupted on the basis of an assessment of ratio of the volume of the data connected to the point identified in the second phase and the volume of the studied macro-structure.

15. Method according to claim 1, **characterized in that** the processes of the phases after the third phase are made on the data transformed in logical form.
